# EUROPÄISCHE PATENTANMELDUNG

(11) **EP 4 174 641 A1**
(43) Veröffentlichungstag der Anmeldung: **03.05.2023**
(21) Anmeldenummer: 22201338.5
(22) Anmeldetag: 13.10.2022
(51) Int. Cl.: G06F 8/34, G06F 8/36, G06F 8/41

(54) **VERFAHREN ZUM ERZEUGEN VON PROGRAMMCODE, VERFAHREN ZUM KONFIGURIEREN EINES STEUERGERÄTS UND COMPUTERSYSTEM**

(30) Priorität: 28.10.2021 DE 102021128101
(71) Anmelder: dSPACE GmbH, 33102 Paderborn (DE)
(72) Erfinder: Mair, Michael, 33102 Paderborn (DE); Wallbaum, Lars, 33102 Paderborn (DE)

(57) **Zusammenfassung**

Die Erfindung betrifft ein computerimplementiertes Verfahren zum Erzeugen von Programmcode (1), mit einem Erzeugen (S1) eines eine Variable repräsentierenden ersten Platzhalters (P1), welcher in einem vorgegebenen Abschnitt (10) des Programmcodes (1) verwendet wird, einem Erzeugen (S2) eines zweiten Platzhalters (P2), welcher vor einen Beginn des den ersten Platzhalter (P1) verwendenden vorgegebenen Abschnitts (10) des Programmcodes (1), platziert wird und einem Erzeugen (S3) eines dritten Platzhalters (P3), welcher nach einem Ende des den ersten Platzhalter (P1) verwendenden vorgegebenen Abschnitts (10) des Programmcodes (1), platziert wird.

Die Erfindung betrifft ferner ein Verfahren zum Konfigurieren eines Steuergeräts. Die vorliegende Erfindung betrifft ferner ein Computerprogramm, einen computerlesbaren Datenträger sowie ein Computersystem.

## Beschreibung

Die vorliegende Erfindung betrifft ein computerimplementiertes Verfahren zum Erzeugen von Programmcode eines ausführbaren Steuerungsprogramms zur Steuerung eines Steuerungssystems.

Die Erfindung betrifft des Weiteren ein Verfahren zum Konfigurieren eines Steuergeräts. Darüber hinaus betrifft die vorliegende Erfindung ein Computerprogramm, einen computerlesbaren Datenträger sowie ein Computersystem.

### Stand der Technik

Steuergeräte werden in einer Vielzahl von Anwendungen eingesetzt, um physikalische Größen eines Prozesses zu erfassen und/oder mittels angeschlossener Aktuatoren auf einen Prozess einzuwirken. Beispielsweise kann es sich um eine Antiblockierregelung eines Bremsvorgangs handeln.

Die das dynamische Verhalten des Prozesses bestimmenden Zeitkonstanten bedingen häufig Zykluszeiten von 1 ms oder kürzer, so dass eine Echtzeitfähigkeit des Steuergeräts erforderlich ist.

Um den Entwurf von Steuergeräten zu beschleunigen, werden Kontrollstrategien häufig anhand von Modellen in einer Rechenumgebung wie MATLAB/Simulink entwickelt. Somit können Prozess und/oder Regler bzw. allgemein das Verhalten des Steuergeräts zunächst simuliert und das Vorliegen von gewünschten Eigenschaften überprüft werden.

Bei den Modellen kann es sich insbesondere um Blockdiagramme handeln, welche Blöcke umfassen, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird.

Insbesondere kann ein Block in jedem Zeitschritt auf Eingangssignale aus dem Vorgängerblock eine oder mehrere Operationen anwenden, um Ausgangssignale des aktuellen Schritts zu erzeugen. Blockdiagramme können neben einem zyklisch ausgeführten Teilmodell zur Beschreibung näherungsweise zeitkontinuierlichen Verhaltens auch ein Teilmodell zur Beschreibung eines diskreten Verhaltens umfassen, in dem eine Anzahl von Zuständen und Übergangsbedingungen definiert sind.

Aus den Modellen kann mittels eines Programmcodegenerators direkt Programmcode für die Programmierung des Steuergeräts erzeugt werden. Beispielsweise ist aus dem Dokument "Production Quality Code Generation from Simulink Block Diagrams", Proceedings of the 1999 International Symposium on Computer Aided Control System Design, Kohala Coast, Hawai'i, von H. Hanselmann et al. ein Programmcodegenerator für die Erzeugung von Programmcode in Produktionsqualität bekannt.

Hierbei kann der erzeugte Programmcode durch eine zusätzliche Annotation der Blöcke bzw. Blockvariablen angepasst werden.

Insbesondere kann ein ursprünglich für die Berechnung mit Fließkommavariablen hoher Genauigkeit erstelltes Modell mit Skalierungen versehen werden, wodurch das Steuergerät mit Festkommazahlen rechnen kann, um eine wesentliche Reduktion des Rechenaufwands bei geringen Einbußen in der Genauigkeit zu erzielen.

Die Entwicklungspartnerschaft AUTOSAR hat seit etlichen Jahren ein Software-Framework für die Entwicklung von Steuergerätesoftware definiert.

Vor der Implementierung der eigentlichen Steuerungsstrategie oder des gewünschten Verhaltens wird eine Architektur der Software festgelegt. Beispielsweise kann die Softwarearchitektur dem AUTOSAR Classic Platform Standard Version 4.3.0 vom 30.11.2016 entsprechen. Die Architektur umfasst Softwarekomponenten, Unterkomponenten wie Runnables und Schnittstellen von Softwarekomponenten.

Messaging zwischen verschiedenen Softwarekomponenten erfolgt über den virtuellen Funktionsbus einer Laufzeitumgebung, die anhand der definierten Architektur passend für das konkrete Steuergerät erzeugt wird.

Bei größeren Entwicklungsprojekten werden unterschiedliche Bereiche der Entwicklung häufig von mehreren Personen durchgeführt, die auch in verschiedenen Unternehmen tätig sein können. So können mehrere Funktionsentwickler einzelne Teile des Modells erstellen und verbessern. Ein einmal erstelltes Teilmodell kann auch für verschiedene Projekte eingesetzt und in der Funktionalität angepasst werden.

Hierbei ist es zweckmäßig, wenn eine inkrementelle Programmcodegenerierung erfolgt, wobei also für einzelne Subsysteme getrennt Programmcode erzeugt und dann zum Programmcode für das Gesamtmodell zusammengefügt wird. Das Modell wird also in mehrere Teilmodelle unterteilt, was den Vorteil bietet, dass bei einer lokalen Änderung nur der Code für die entsprechenden Teilmodelle neu generiert werden muss.

Unter inkrementeller Programmcodegenerierung wird verstanden, dass überprüft wird, ob das jeweilige Teilmodell für einen Programmcodegenerator nach der letzten Programmcodegenerierung geändert wurde. Zu diesem Zweck kann beispielsweise eine Checksumme über die Blöcke des Programmcodegenerators und/oder ein Modellversionszähler, der bei jeder Änderung heraufgesetzt wird, in einer Definitionsdatensammlung hinterlegt sein.

Alternativ oder zusätzlich kann eine Checksumme über den zuletzt erzeugten Code und/oder ein Codeversionszähler, der bei jeder Codegenerierung für diese Codegenerierungseinheit heraufgesetzt wird, in der Definitionsdatensammlung hinterlegt sein. Wenn sich insbesondere eine neu berechnete Checksumme über die Blöcke des Programmcodegenerators von der hinterlegten Checksumme für das Modell unterscheidet, so muss anschließend eine erneute Programmcodegenerierung erfolgen, weil seit der letzten Programmcodegenerierung Änderungen am Modell vorgenommen worden sind. Andernfalls, d.h. wenn aktueller Programmcode vorliegt, kann dieser verwendet werden.

Der Programmcodegenerator generiert demnach Programmcode einer textbasierten Programmiersprache, z.B. C-Code, direkt aus einem graphischen Modell wie z.B. MathWorks, Simulink und/oder Stateflow heraus. Dies ermöglicht es, einen einmal generierten Programmcode für Library-Subsysteme oder referenzierte Modelle in verschiedenen Projekten einzusetzen, ohne den Programmcode für diese neu generieren und testen zu müssen.

DE 102020124080 A1 offenbart ein Verfahren zum Erzeugen von Quellcode aus einem oder mehreren Blöcken eines Blockdiagramms, wobei das Blockdiagramm hierarchisch ist und mindestens ein erstes Subsystem umfasst, welches für eine inkrementelle Codegenerierung eingerichtet ist, wobei das erste Subsystem von einem zweiten Subsystem umfasst wird, wobei das Blockdiagramm eine Definitionsdatenbank referenziert, welche ein erstes Objekt umfasst, das Verfahren umfassend die Schritte Öffnen des Blockdiagramms umfassend das erste Subsystem in einem Modelleditor, Erzeugen von Quellcode für das erste Subsystem, das Erzeugen von Quellcode umfassend ein Ermitteln von Informationen zum ersten Subsystem, Hinterlegen von Informationen zum ersten Subsystem in dem ersten Objekt, und Erzeugen von Quellcode für das Blockdiagramm, wobei das erste Objekt ausgelesen wird, um mindestens einen Parameter der Codegenerierung zu beeinflussen.

In der Definitionsdatensammlung bzw. -datenbank können beispielsweise Informationen darüber hinterlegt sein, dass auf eine Variable nur lesend zugegriffen wird. Dies ermöglicht eine Optimierung der Codegenerierung in einem äußeren Subsystem, ohne dass für ein inneres Teilmodell eine erneute Codegenerierung erforderlich wäre. Der Datenaustausch zwischen dem äußeren und dem inneren Subsystem kann beispielsweise mittels Eingabe- und Ausgabeports erfolgen. Wenn das innere Teilmodell eine Funktion modelliert, ist die aufrufende Seite dabei im graphischen Modell ein äußeres (Sub-)System und die aufgerufene Seite, also das innere Teilmodell, empfängt z.B. Daten über einen Port und gibt Daten über einen weiteren Port aus. Hierbei kann es vorgesehen sein, im inneren Subsystem einen Platzhalter zu definieren, für welchen bei der Codegenerierung des aufrufenden Systems eine globale Variable angelegt wird. Dies ermöglicht eine gewisse Flexibilität in der Kommunikation, die aber beispielsweise nicht dazu geeignet ist, alle unter AUTOSAR üblichen Kommunikationsarten zu unterstützen.

Vor diesem Hintergrund ist es eine Aufgabe der vorliegenden Erfindung, den Stand der Technik weiterzuentwickeln und insbesondere eine bessere Unterstützung verschiedener Kommunikationsarten ohne erneute Generierung des Programmcodes zu ermöglichen.

### Offenbarung der Erfindung

Die Aufgabe wird erfindungsgemäß durch ein computerimplementiertes Verfahren zum Erzeugen von Programmcode eines ausführbaren Steuerungsprogramms zur Steuerung eines Steuerungssystems mit den Merkmalen des Patentanspruchs 1 gelöst.

Die Aufgabe wird ferner durch ein Verfahren zum Konfigurieren eines Steuergeräts mit den Merkmalen des Patentanspruchs 14, ein Computerprogramm mit den Merkmalen des Patentanspruchs 15, einen computerlesbaren Datenträger mit den Merkmalen des Patentanspruchs 16 und ein Computersystem mit den Merkmalen des Patentanspruchs 17 gelöst.

Die Erfindung betrifft ein computerimplementiertes Verfahren zum Erzeugen von Programmcode eines ausführbaren Steuerungsprogramms zur Steuerung eines Steuerungssystems, wobei die Funktionalität des Steuerungsprogramms zumindest teilweise in einem grafischen Modell beschrieben ist, wobei das grafische Modell in Programmcode einer textbasierten Programmiersprache übersetzt wird.

Das Verfahren umfasst ein Erzeugen eines eine Variable repräsentierenden ersten Platzhalters, welcher in einem vorgegebenen Abschnitt des Programmcodes verwendet wird.

Des Weiteren umfasst das Verfahren ein Erzeugen eines zweiten Platzhalters, welcher vor einen Beginn des den ersten Platzhalter verwendenden vorgegebenen Abschnitts des Programmcodes, platziert wird.

Das Verfahren umfasst darüber hinaus ein Erzeugen eines dritten Platzhalters, welcher nach einem Ende des den ersten Platzhalter verwendenden vorgegebenen Abschnitts des Programmcodes, platziert wird.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken.

Das Verfahren umfasst ein Einlesen eines Blockdiagramms und ein Erzeugen eines Programmcodes mit dem erfindungsgemäßen Verfahren.

Des Weiteren umfasst das Verfahren ein Kompilieren des Programmcodes für die Recheneinheit, so dass ein ausführbarer Programmcode erzeugt wird, ein Übertragen des ausführbaren Programmcodes auf das Steuergerät und ein Hinterlegen des ausführbaren Programmcodes auf einem nichtflüchtigen Speicher des Steuergeräts und/oder Ausführen des ausführbaren Programmcodes durch die Recheneinheit des Steuergeräts.

Die Erfindung betrifft des Weiteren ein Computerprogramm mit Programmcode, um zumindest eines der erfindungsgemäßen Verfahren durchzuführen, wenn das Computerprogramm auf einem Computer ausgeführt wird.

Die Erfindung betrifft ferner einen computerlesbaren Datenträger mit Programmcode eines Computerprogramms, um zumindest eines der erfindungsgemäßen Verfahren durchzuführen, wenn das Computerprogramm auf einem Computer ausgeführt wird.

Darüber hinaus betrifft die Erfindung ein Computersystem umfassend eine Mensch-Maschine-Schnittstelle, einen nichtflüchtigen Speicher und einen Prozessor, wobei der Prozessor dazu eingerichtet ist, das erfindungsgemäße Verfahren auszuführen.

Eine Idee der vorliegenden Erfindung ist es, dass durch Vorsehen des ersten, zweiten und dritten Platzhalters bereits bei der inkrementellen Codegenerierung einer jeweiligen Funktion ein flexiblerer Code erzeugt wird. Somit kann bereits generierter Programmcode für jeweilige Anwendungszwecke durch die Verwendung der Platzhalter entsprechend angepasst werden.

Um die nötige Flexibilität zu erreichen, werden anstatt eines herkömmlicherweise verwendeten einzelnen Platzhalters, die besagten drei Platzhalter verwendet.

Der herkömmlicherweise verwendete einzelne Platzhalter wird im Programmcode variablenartig, d.h. wie eine globale Variable verwendet und kann somit nur durch etwas ersetzt werden, was sich im Programmcode wie eine Variable verhält.

Die erfindungsgemäßen Platzhalter werden bei der inkrementellen Programmcodegenerierung in den Programmcode erzeugt, wobei die Definition der Platzhalter jedoch erst zu einem späteren Zeitpunkt erzeugt wird. Wird zu dem späteren Zeitpunkt sodann das umgebende System erzeugt, kann die Definition der Platzhalter je nach Erfordernis generiert werden.

Der Vorteil dieser Vorgehensweise liegt darin, dass durch Vorsehen der Platzhalter die Position eines Lesens und Schreibens einer durch die Platzhalter repräsentierten Variable markierbar bzw. definierbar ist.

Der zweite Platzhalter wird dabei vor eine erste Verwendung des ersten Platzhalters im Programmcode gesetzt und der dritte Platzhalter wird hinter die letzte Verwendung des ersten Platzhalters im Programmcode gesetzt.

Durch die Einführung der Platzhalter können somit verschiedene Phasen eines durch den Platzhalter repräsentierten Datenobjekts unterschieden werden, wodurch jeweils der für die Phase geeignete Programmcode verwendet werden kann. Bei einem seriellen Ablauf des Programms wird zuerst der das Lesen des Datenobjekts repräsentierende zweite Platzhalter, dann der das Datenobjekt repräsentierende erste Platzhalter sowie abschließend der das Schreiben des Datenobjekts repräsentierende dritte Platzhalter durchlaufen.

Durch die variablenartige Verwendung des ersten Platzhalters ist es unmöglich, diesen zu einer Zugriffsfunktion zu definieren, die im Programmcode nicht variablenartig verwendet werden kann.

Da der zweite und der dritte Platzhalter im Programmcode nicht variablenartig verwendet werden, ist es möglich diese zu solchen Zugriffsfunktionen zu definieren. Durch die Positionierung relativ zum ersten Platzhalter ist es daher möglich, diese Zugriffsfunktionen im Programmcode vor oder hinter der Verwendung des ersten Platzhalters zu platzieren.

Alternativ kann zumindest einer der Platzhalter beispielsweise leer definiert werden, d.h. dieser wird in diesem Fall durch nichts bzw. ein Leerzeichen ersetzt. Dadurch kann der Code kompakt gehalten werden, wenn eine der Phasen nicht benötigt wird.

Die Unterscheidung zwischen dem Lesen des das Datenobjekt repräsentierenden zweiten Platzhalters und dem Schreiben des das Datenobjekt repräsentierenden dritten Platzhalters ist beispielsweise unter AUTOSAR für den Zugriff auf Interrunnable-Variablen sinnvoll. Eine Interrunnable-Variable in AUTOSAR ist ein Modellierungselement zur Spezifikation einer Kommunikation zwischen den Runnable Entitäten in einer Softwarekomponente.

Interrunnable-Variablen können implizit oder explizit sein. Implizit bedeutet, dass eine Runnable Entität auf einer lokalen Kopie einer Interrunnable-Variablen arbeitet. Die lokale Kopie wird bei einem Ausführungsbeginn der Runnable Entität durch die Laufzeitumgebung erstellt. Änderungen werden zurückgeschrieben, wenn die Runnable Entität beendet ist. Dadurch wird ein konkurrierender Zugriff auf Interrunnable-Variablen während der Ausführung der Runnable Entität vermieden. Explizit bedeutet, dass die Runnable Entität direkt auf eine Interrunnable-Variable zugreifen kann. Änderungen sind für andere Runnable Entitäten mit Zugriff auf die entsprechende Interrunnable-Variable sofort sichtbar.

Auch bei AUTOSAR Kommunikation über Ports ist die Unterscheidung zwischen dem Lesen des das Datenobjekt repräsentierenden zweiten Platzhalters und dem Schreiben des das Datenobjekt repräsentierenden dritten Platzhalters hilfreich.

Eine implizite AUTOSAR Kommunikation kann variablenartig benutzt werden, muss jedoch zwischen lesenden und schreibenden Zugriffen unterscheiden. Diese kann also nicht für den ersten Platzhalter verwendet werden, wenn dieser allgemein verwendet wird.

Eine explizite AUTOSAR Kommunikation kann nicht variablenartig benutzt werden und muss zwischen lesendem und schreibendem Zugriff unterscheiden.

Beides kann nun gelöst werden, indem der zweite Platzhalter zu einem lesenden und/oder der dritte Platzhalter zu einem schreibenden Zugriff mit einem lokalen Puffer aufgelöst wird und der erste Platzhalter zu einem direkten Zugriff auf den lokalen Puffer.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der erste Platzhalter, der zweite Platzhalter und der dritte Platzhalter in einem, zu einem Subsystem des, insbesondere umgebenden, grafischen Modells gehörigen Programmcode erzeugt werden. Dadurch kann in vorteilhafter Weise eine durch den ersten Platzhalter repräsentierte Variable an eine vorgegebene Position des dem grafischen Modells zugehörigen Programmcode erzeugt werden.

Gemäß einer weiteren bevorzugten Weiterbildung der Erfindung ist vorgesehen, dass das Verfahren ein Erzeugen eines vierten Platzhalters umfasst, welcher an einen Beginn eines Verwendungsbereichs des vorgegebenen Abschnitts des Programmcodes zur Definition der durch den ersten Platzhalter repräsentierten Variable platziert wird. Durch Vorsehen des vierten Platzhalters, welcher ein Setup-Platzhalter ist, kann somit in vorteilhafter Weise eine Hilfsvariable verwendet werden, die den Wert des Datenobjekts bzw. der Variable puffert.

Gemäß einer weiteren bevorzugten Weiterbildung der Erfindung ist vorgesehen, dass in dem vorgegebenen Abschnitt des Programmcodes unter Verwendung des eine Variable repräsentierenden ersten Platzhalters eine Berechnung durchgeführt wird. Durch das Ersetzen des ersten Platzhalters durch eine Variable kann damit eine im Code durchgeführte Berechnung und/oder Operation entsprechend beeinflusst werden.

Gemäß einer weiteren bevorzugten Weiterbildung der Erfindung ist vorgesehen, dass der zweite Platzhalter unmittelbar vor den Beginn des den ersten Platzhalter verwendenden vorgegebenen Abschnitts des Programmcodes, insbesondere am Beginn eines Verwendungsbereichs des ersten Platzhalters, platziert wird. Dadurch kann ein aktueller Wert für die durch den ersten Platzhalter repräsentierte Variable in vorteilhafter Weise unmittelbar vor ihrer Verwendung ermittelt werden.

Mit dem zweiten Platzhalter kann beispielsweise eine lokale Variable definiert werden, auf die dann über den ersten Platzhalter zugegriffen wird. Alternativ ist es auch möglich, dass über den ersten Platzhalter auf eine globale Variable zugegriffen wird und keine lokale Variable definiert wird.

Die Idee der Erfindung besteht darin, dass man Zugriffe auf externe Datenobjekte im erzeugten Programmcode mehr oder weniger beliebig anpassen kann, ohne den generierten Programmcode neu erzeugen zu müssen, indem man die Platzhalter entsprechend ersetzt.

Gemäß einer weiteren bevorzugten Weiterbildung der Erfindung ist vorgesehen, dass der dritte Platzhalter unmittelbar nach dem Ende des den ersten Platzhalter verwendenden vorgegebenen Abschnitts des Programmcodes, insbesondere am Ende des Verwendungsbereichs des ersten Platzhalters, platziert wird. Dadurch kann direkt hinter einem Verwendungsbereich des ersten Platzhalters ein neu berechneter Wert geschrieben werden, indem der dritte Platzhalter durch einen Schreibzugriff ersetzt wird. Potentielle Seiteneffekte durch eine Verzögerung zwischen Berechnung und Zurückschreiben werden vermieden.

Gemäß einer weiteren bevorzugten Weiterbildung der Erfindung ist vorgesehen, dass zumindest ein Platzhalter, insbesondere der erste Platzhalter, der zweite Platzhalter, der dritte Platzhalter und/oder der vierte Platzhalter, als Präprozessor-Makro in den Programmcode generiert wird.

Gemäß einer weiteren bevorzugten Weiterbildung der Erfindung ist vorgesehen, dass die Platzhalter in dem Subsystem verwendet werden und in dem grafischen Modell definiert sind. Das grafische Modell erlaubt somit die Definition der im Rahmen der inkrementellen Codegenerierung verwendeten Variablen und deren Implementierung bzw. Verwendung in dem entsprechenden Subsystem.

Die entsprechende Variable kann dabei beispielsweise in einem Datenwörterbuch definiert sein. Bei Verwendung der Platzhalter an den Schnittstellen der inkrementellen Codegenerierungseinheit erzeugt TargetLink bei dem äußeren System der Codegenerierung automatisch Definitionen anhand der im grafischen Modell bestehenden Verbindungen. Im inneren System wird dabei die Verwendung der entsprechenden Platzhalter generiert. Im äußeren System wird hingegen eine Definition der im Inneren verwendeten Platzhalter generiert.

In Modellen mit mehreren Hierarchieebenen können auch mehrere Gruppen von Platzhaltern verwendet werden, wobei zweckmäßigerweise ein Platzhalter eines inneren Subsystems mit dem entsprechenden Platzhalter eines äußeren Subsystems gleichgesetzt wird. Vorzugsweise werden erst in einem alle Subsysteme umfassenden Modell entsprechende Definitionen für die verwendeten Platzhalter generiert.

Gemäß einer weiteren bevorzugten Weiterbildung der Erfindung ist vorgesehen, dass bei einer, insbesondere inkrementellen, Programmcodegenerierung durch eine Definition zumindest eines Platzhalters in einem bereits generierten Programmcode zumindest eine lokale Variable angelegt wird.

Gemäß einer weiteren bevorzugten Weiterbildung der Erfindung ist vorgesehen, dass auf die durch den ersten Platzhalter repräsentierte Variable über einen Funktionsaufruf zugegriffen wird, und wobei der zweite Platzhalter, der dritte Platzhalter und/oder der vierte Platzhalter leer definierbar sind. Die durch den ersten Platzhalter repräsentierte Variable ist dabei in vorteilhafter Weise in einer Datenbank bzw. einem Datenwörterbuch abgelegt, welches nicht Teil des graphischen Modells ist.

Gemäß einer weiteren bevorzugten Weiterbildung der Erfindung ist vorgesehen, dass ein Lesen und Schreiben der, insbesondere externen, Variable über einen Funktionsaufruf, insbesondere in einer AUTOSAR RTE-API bzw. Laufzeitumgebung-API, durchgeführt wird, wobei die Platzhalter eine Position definieren, an welcher diese im Programmcode generiert werden. Somit kann die entsprechende Variable exakt an einer gewünschten Position im Code generiert werden.

Gemäß einer weiteren bevorzugten Weiterbildung der Erfindung ist vorgesehen, dass die Platzhalter derart definiert sind, dass diese eine Sperre in Multithreading-Modellen bereitstellen, welche einen gleichzeitigen Zugriff unterschiedlicher Threads auf dieselbe Ressource verhindern. Ein Nutzer kann dadurch mit einer passenden Makrodefinition auf einfache Weise einen Locking-Mechanismus implementieren.

Gemäß einer weiteren bevorzugten Weiterbildung der Erfindung ist vorgesehen, dass die Platzhalter derart definiert sind, dass eine Fehlerbehandlung einer Zugriffsfunktion, insbesondere durch Speichern eines letzten fehlerfreien Werts in einer persistenten Variablen, bereitgestellt wird.

So kann in vorteilhafter Weise der letzte bekannte fehlerfreie Wert in einer eigenen persistenten Variable gespeichert werden (die in dem entsprechenden Setup-Makro definiert werden kann), damit dieser im Fehlerfall verwendet werden kann, oder es kann eine alternative Zugriffsfunktion aufgerufen werden.

Die hierin beschriebenen Merkmale des Verfahrens zum Erzeugen von Programmcode eines ausführbaren Steuerungsprogramms zur Steuerung eines Steuerungssystems sind ebenso auf das erfindungsgemäße Computersystem und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines Verfahrens zum Erzeugen von Programmcode eines ausführbaren Steuerungsprogramms zur Steuerung eines Steuerungssystems gemäß einer bevorzugten Ausführungsform der Erfindung;
- Fig. 2: ein Diagramm des zeitlichen Verlaufs einer Ausführung von zwei Runnable Entitäten eines ausführbaren Steuerungsprogramms auf einem Steuergerät;
- Fig. 3: ein Verfahren zum Konfigurieren eines Steuergeräts gemäß der bevorzugten Ausführungsform der Erfindung;
- Fig. 4: eine schematische Darstellung eines Computersystems gemäß der bevorzugten Ausführungsform der Erfindung; und
- Fig. 5: ein beispielgemäßes Blockdiagramm, aus dem Programmcode erzeugt werden kann.

Sofern nicht anders angegeben, bezeichnen gleiche Bezugszeichen gleiche Elemente der Zeichnungen.

### Ausführliche Beschreibung der Ausführungsformen

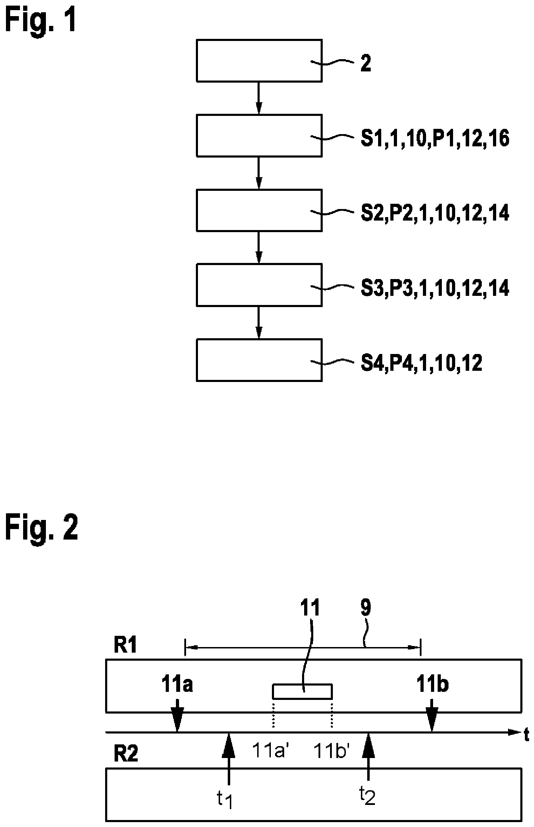

Das in Fig. 1 gezeigte Verfahren umfasst ein Erzeugen von Programmcode 1 eines ausführbaren Steuerungsprogramms zur Steuerung eines Steuerungssystems.

Die Funktionalität des Steuerungsprogramms ist dabei zumindest teilweise in einem grafischen Modell 2 beschrieben. Das grafische Modell 2 wird in Programmcode 1 einer textbasierten Programmiersprache übersetzt.

Das Verfahren umfasst ferner ein Erzeugen S1 eines eine Variable repräsentierenden ersten Platzhalters P1, welcher in einem vorgegebenen Abschnitt 10 des Programmcodes 1 verwendet wird.

Des Weiteren umfasst das Verfahren ein Erzeugen S2 eines zweiten Platzhalters P2, welcher vor einen Beginn des den ersten Platzhalter P1 verwendenden vorgegebenen Abschnitts 10 des Programmcodes 1, platziert wird.

Darüber hinaus umfasst das Verfahren ein Erzeugen S3 eines dritten Platzhalters P3, welcher nach einem Ende des den ersten Platzhalter P1 verwendenden vorgegebenen Abschnitts 10 des Programmcodes 1 platziert wird.

Der erste Platzhalter P1, der zweite Platzhalter P2 und der dritte Platzhalter P3 werden in einem, zu einem Subsystem 12 des, insbesondere umgebenden, grafischen Modells 2 gehörigen Programmcode 1 erzeugt.

Das computerimplementierte Verfahren umfasst ferner ein Erzeugen S4 eines vierten Platzhalters P4, welcher an einen Beginn eines Verwendungsbereichs 14 des vorgegebenen Abschnitts 10 des Programmcodes 1 zur Definition der durch den ersten Platzhalter P1 repräsentierten Variable platziert wird.

In dem vorgegebenen Abschnitt 10 des Programmcodes 1 wird unter Verwendung des eine Variable repräsentierenden ersten Platzhalters P1 eine Berechnung durchgeführt.

Der zweite Platzhalter P2 wird unmittelbar vor den Beginn des den ersten Platzhalter P1 verwendenden vorgegebenen Abschnitts 10 des Programmcodes 1, insbesondere am Beginn des Verwendungsbereichs 14 des ersten Platzhalters P1, platziert.

Der dritte Platzhalter P3 wird unmittelbar nach dem Ende des den ersten Platzhalter P1 verwendenden vorgegebenen Abschnitts 10 des Programmcodes 1, insbesondere am Ende des Verwendungsbereichs 14 des ersten Platzhalters P1, platziert.

Zumindest ein Platzhalter, insbesondere der erste Platzhalter P1, der zweite Platzhalter P2, der dritte Platzhalter P3 und/oder der vierte Platzhalter P4, wird hierbei als Präprozessor-Makro in den Programmcode 1 generiert.

Die Platzhalter werden in dem Subsystem 12 verwendet und sind in dem grafischen Modell 2 definiert.

Bei einer, insbesondere inkrementellen, Programmcodegenerierung wird durch eine Definition zumindest eines Platzhalters P1, P2, P3, P4 in einem bereits generierten Programmcode 1 zumindest eine lokale Variable angelegt.

Auf die durch den ersten Platzhalter P1 repräsentierte Variable wird über einen Funktionsaufruf 16 zugegriffen. Ferner können der zweite Platzhalter P2, der dritte Platzhalter P3 und/oder der vierte Platzhalter P4 bei Bedarf leer definiert werden.

Im Rahmen herkömmlicher, variablenartiger Platzhalter ist eine feste Lese-Ausführung-Schreiben-Abfolge vorgesehen. Dies kann beispielsweise im Fall von Nebenläufigkeit von Subsystemen bzw. des von diesen umfassten Programmcodes wie den in Fig. 2 gezeigten Runnable Entitäten R1 und R2 problematisch werden. Der Zugriff auf den Platzhalter-Wert erfolgt beispielsweise durch Funktionsaufruf in einer runtime environment API zu Beginn des entsprechenden Programmcode-Abschnitts.

Herkömmlicherweise kann nachträglich keine RTE-API Funktion in einem bereits inkrementell erzeugten Programmcode aufgerufen werden, wenn dieser nur einen (variablenartigen) Platzhalter aufweist. Daher kann die Funktion nur im neu generierten Programmcode des äußeren Systems vor den Aufruf des inneren Systems generiert werden.

Fig. 2 zeigt den zeitlichen Verlauf einer Ausführung von zwei Runnable Entitäten R1 und R2 eines ausführbaren Steuerungsprogramms auf einem Steuergerät.

Indem der Code für die Runnable Entität R1 gemäß des erfindungsgemäßen Verfahrens generiert wird, kann eine bessere zeitliche Koinzidenz zwischen Lese- und Rechenvorgängen erzielt werden.

Auf der x-Achse ist der zeitliche Verlauf der Ausführung dargestellt; man sieht, dass R1 und R2 parallel ausgeführt werden. Dabei bezeichnet 9 einen inkrementell generierten Bereich von R1 und 11 einen Teilbereich in dem auf den Platzhalter zugegriffen bzw. mit diesem gerechnet wird. Nach dem Stand der Technik finden die Lese- und Schreibzugriffe außerhalb des inkrementell generierten Bereichs statt, hier an den Zeitpunkten 11a und 11b dargestellt.

Ein Lesen und Schreiben der, insbesondere externen, Variable wird dabei jeweils über einen Funktionsaufruf 16, insbesondere in einer AUTOSAR RTE-API, durchgeführt.

In der Figur ist außerdem gezeigt, wie eine parallel ausgeführte Runnable Entität R2 zum Zeitpunkt t₁ auf dieselbe Variable zugreift und einen neuen Wert schreibt. Weil Runnable R1 die Berechnungen mit der Variablen durchführt, nachdem der Schreibzugriff von R2 erfolgt, müssten diese korrekterweise mit dem neuen Wert erfolgen. Da der Lesezugriff aber zum Zeitpunkt 11a erfolgte, werden die Berechnungen tatsächlich noch mit einem alten Wert durchgeführt.

Weiterhin greift Runnable Entität R2 zum Zeitpunkt t₂ erneut auf die Variable zu, um den aktuellen Wert lesen. Korrekterweise müsste jetzt der durch die Berechnungen in R1 geänderte Wert anliegen, dieser wird aber erst zum Zeitpunkt 11b zurückgeschrieben. Insgesamt führt die Platzierung der Lese- und Schreibzugriffe dazu, dass sowohl R1 als auch R2 einen veralteten und möglicherweise falschen Wert für die Variable verarbeiten.

Eine Codegenerierung nach der vorliegenden Erfindung erzeugt die Zugriffe im Code des Teilbereichs 11, so dass diese näher an den Berechnungen sind, wie hier durch vertikale gestrichelte Linien 11a' und 11b' dargestellt. Mit der vorliegenden Erfindung ist es daher auch bei inkrementeller Codegenerierung möglich, dass in der Berechnung 11 der zum Zeitpunkt t₁ von R2 geschrieben Wert verwendet wird, und zum Zeitpunkt t₂ von R2 bereits der in 11 berechnete Wert gelesen wird.

Gemäß einer weiteren bevorzugten Ausführungsform ist vorgesehen, dass für die Modellierung von AUTOSAR-Softwarekomponenten bzw. darin umfassten Runnable Entitäten TargetLink verwendet wird. Eine Runnable Entität stellt das kleinste eigenständig ausführbare Teilmodul einer AUTOSAR-Softwarekomponente dar. Wenn die Runnable Entität eine Vielzahl von Teilmodulen wie Subsysteme, insbesondere Bibliotheksblöcke aufweist, kann die Zuordnung eines aufgetretenen Fehlers bzw. das Debugging schwierig werden.

Anstelle von direkter bzw. ausdrücklich modellierter AUTOSAR-Kommunikation ist es sinnvoll, Platzhalter zu verwenden. Dann kann für das einzelne Teilmodul ein angepasstes Modell erstellt werden, welches eine für das Testen angepasste Runnable Entität enthält.

Durch die Verwendung von Platzhaltern muss der Code für das Teilmodul selbst nur ein einziges Mal generiert werden. Dadurch können mehrfache Tests vermieden werden, welche in der Regel bei einer wiederholten Codegenerierung erforderlich sind.

Eine vergleichbare Testmodellierung ist prinzipiell auch für Nicht-AUTOSAR-Modelle einsetzbar, welche vergleichbare Access- bzw. Zugriffs-Funktionen wie explizite AUTOSAR-Kommunikation einsetzen. Ein Vorteil der Platzhalter besteht darin, sowohl für explizite Zugriffsfunktionen als auch herkömmliche/variablenartige Zugriffe eingesetzt werden zu können.

Gemäß einer weiteren bevorzugten Ausführungsform ist vorgesehen, dass Kalibrier- und Messgrößen getrennt von einem funktionalen Code abgelegt sind. Daher kann es vorkommen, dass zum Zeitpunkt der Codegenerierung für eine Komponente noch nicht genau bekannt ist, woher diese Größen bezogen werden sollen. Weiterhin soll möglicherweise die Komponente in einem anderen Projekt wiederverwendet werden.

Die Verwendung von Konstanten unter AUTOSAR erfordert in der Regel RTE-API-Funktionsaufrufe, da Kalibrier- und Messgrößen in der RTE bzw. dem Runtime Environment hinterlegt sein sollen. In anderen Fällen kann der Aufruf einer speziellen Hardware-Funktion erforderlich sein. Indem Platzhalter für den Zugriff auf Konstanten modelliert werden, können die Zugriffsdetails ohne Änderung am funktionalen Code nachträglich angepasst werden.

Des Weiteren kann das entsprechende Subsystem, welches beispielsweise einen PID-Regler mit kalibrierbaren Funktionen bereitstellt, leicht wiederverwendet werden, ohne dass eine erneute Codegenerierung erforderlich ist.

Gemäß einer weiteren bevorzugten Ausführungsform ist vorgesehen, dass die Platzhalter P1, P2, P3, P4 derart definiert sind, dass diese eine Sperre in Multithreading-Modellen bereitstellen, welche einen gleichzeitigen Zugriff unterschiedlicher Threads auf dieselbe Ressource verhindern.

Sobald ein Modell bzw. ein Programm mehrere Threads umfasst, erfordert dies einen Locking- bzw. Sperr-Mechanismus, der gleichzeitige Zugriffe verschiedener Threads auf dieselbe Ressource, insbesondere shared Memory also z.B. eine globale Variable verhindert.

An einer entsprechenden Platzhalterposition im Code kann beispielsweise ein Bit auf eins gesetzt oder eine vorgegebene Zählvariable inkrementiert werden. Ein jeweiliger Task arbeitet dann weiter, sobald dies möglich ist und wartet somit ein entsprechendes Lock ab. Zum Freigeben wird das entsprechende Bit bzw. die Zählvariable anschließend dann wieder zurückgesetzt.

Der Nutzer kann daher mit einer passenden Makrodefinition auf einfache Weise einen Locking-Mechanismus implementieren. Der zweite Platzhalter P2 wird dabei zum Sperren, der dritte Platzhalter P3 zum Freigeben verwendet.

Gemäß einer weiteren bevorzugten Ausführungsform ist vorgesehen, dass die Platzhalter ferner derart definiert sind, dass eine Fehlerbehandlung einer Zugriffsfunktion, insbesondere durch Speichern eines letzten fehlerfreien Werts in einer persistenten Variablen, bereitgestellt wird.

Einige Zugriffsfunktionen, wie z.B. RTE-API Funktionen, können in einem Fehlerfall signalisieren, dass die gelesenen Daten nicht korrekt sind, bzw. die Daten nicht korrekt geschrieben werden konnten. Hier kann eine entsprechende Behandlung dieser Fehlerfälle in die Makrodefinitionen eingearbeitet werden. So kann z.B. der letzte bekannte fehlerfreie Wert in einer eigenen persistenten Variable gespeichert werden, die in dem entsprechenden Setup-Makro bzw. Platzhalter definiert werden kann, damit dieser im Fehlerfall verwendet werden kann, oder es kann eine alternative Zugriffsfunktion aufgerufen werden.

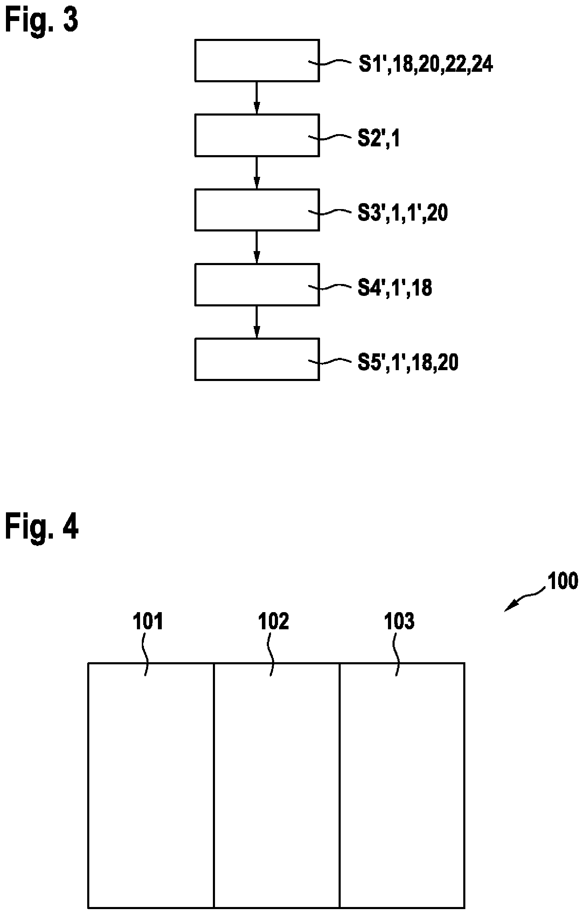

Fig. 3 zeigt ein Verfahren zum Konfigurieren eines Steuergeräts gemäß der bevorzugten Ausführungsform der Erfindung, wobei das Steuergerät 18 mindestens eine Recheneinheit 20 umfasst und vorzugsweise mindestens einen Sensor 22 und/oder mindestens einen Aktor 24 aufweist, um Daten eines physikalischen Prozesses zu erfassen und/oder auf diesen einzuwirken.

Das Verfahren umfasst ein Einlesen S1' eines Blockdiagramms sowie ein Erzeugen S2' eines Programmcodes 1 mit dem erfindungsgemäßen Verfahren.

Des Weiteren umfasst das Verfahren ein Kompilieren S3' des Programmcodes 1 für die Recheneinheit 20, so dass ein ausführbarer Programmcode 1' erzeugt wird und ein Übertragen S4' des ausführbaren Programmcodes 1' auf das Steuergerät 18.

Das Verfahren umfasst ferner ein Hinterlegen S5' des ausführbaren Programmcodes 1' auf einem nichtflüchtigen Speicher des Steuergeräts 18 und/oder Ausführen des ausführbaren Programmcodes 1' durch die Recheneinheit 20 des Steuergeräts 18.

Fig. 4 zeigt eine schematische Darstellung eines Computersystems 100 gemäß der bevorzugten Ausführungsform der Erfindung.

Das Computersystem 100 umfasst eine Mensch-Maschine-Schnittstelle 101, einen nichtflüchtigen Speicher 102 und einen Prozessor 103. Der Prozessor 103 ist dazu eingerichtet, zumindest eines der erfindungsgemäßen Verfahren durchzuführen.

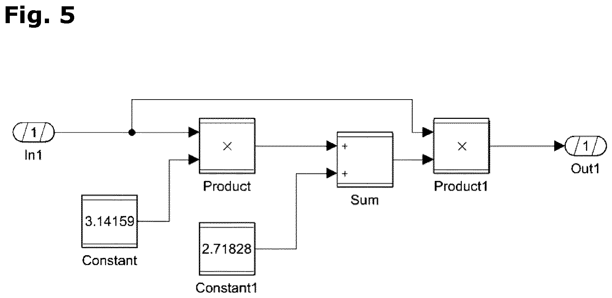

Fig. 5 zeigt ein Beispiel eines Blockdiagramms, aus dem Programmcode erzeugt werden kann.

In dem Blockdiagramm sind ein Eingangsport "In1", über den ein skalares Eingangssignal empfangen wird, und ein Ausgangsport "Out1" dargestellt, über den ein skalares Ausgangssignal ausgegeben wird. Der Eingangsport "In1" ist mit einem ersten Berechnungsblock "Product" verbunden, der das erhaltene Signal mit einem aus dem Konstantenblock "Constant" erhaltenen Wert 3.14159 multipliziert. Der erste Berechnungsblock "Product" ist mit einem zweiten Berechnungsblock "Sum" verbunden, der zu dem erhaltenen Signal einen aus dem Konstantenblock "Constant1" erhaltenen Wert 2.71828 addiert. Der zweite Berechnungsblock "Sum" ist mit einem dritten Berechnungsblock "Product1" verbundenen, der das erhaltene Signal mit dem am Eingangsport "In1" empfangenen Eingangssignal multipliziert und das Ergebnis an den Ausgangsport weitergibt.

Gemäß einer bevorzugten Ausführungsform des erfindungsgemäßen Verfahrens wird ein erster Satz von Platzhaltern für das Eingangssignal erzeugt, und ein zweiter Satz von Platzhaltern für das Ausgangssignal erzeugt. Für das Eingangssignal werden vorzugsweise ein erster Platzhalter "RDI_In", ein zweiter Platzhalter "RDI_In_Start", ein dritter Platzhalter, "RDI_In_Stop" und ein vierter Platzhalter "RDI_In_Setup" erzeugt. Für das Ausgangssignal werden bevorzugt ein erster Platzhalter "RDI_Out", ein zweiter Platzhalter "RDI_Out_Start", ein dritter Platzhalter, "RDI_Out_Stop" und ein vierter Platzhalter "RDI_Out_Setup" erzeugt.

Um das Blockdiagramm als eine Bibliotheksfunktion "LibraryFunction" einbinden zu können, wird zweckmäßigerweise folgender Programmcode erzeugt:

```
 #include "tl_rdi_LibraryFunction.h"
 void Sincr1_LibraryFunction(void)
 {
    RDI_In_Setup
    RDI_Out_Setup
    RDI_In_Start
    RDI_Out_Start
    /* Outport: LibraryFunction/Out1
       # combined # Product: LibraryFunction/Product1
       # combined # Sum: LibraryFunction/Sum
       # combined # Product: LibraryFunction/Product */
    RDI_Out = RDI_In * ((RDI_In * 3.14159) + 2.71828);
    RDI_In_Stop
    RDI_Out_Stop }
```

Je nach der gewünschten Verwendung der Bibliotheksfunktion können die Platzhalter durch unterschiedliche Programmcodefragmente ersetzt werden. Sollen beispielsweise die Eingangswerte über eine Variable erhalten werden und ebenfalls über eine Variable ausgegeben werden, so können der zweite, der dritte und der vierte Platzhalter jeweils leer definiert werden. Der resultierende Programmcode ist genauso kompakt wie ohne das Bereitstellen zusätzlicher Platzhalter.

Sollen in einer alternativen Ausführungsform die Eingangswerte über eine erste Zugriffsfunktion "RDI_InImpl" empfangen werden und die Ausgangswerte über eine zweite Zugriffsfunktion "RDI_OutImpl" ausgegeben werden, so können die Platzhalter, insbesondere als Prärpozessormakros wie folgt definiert werden:

```
 #define RDI_In RDI_InImpl
 #define RDI In Setup float64 RDI InImpl;
 #define RDI In Start Rte_Read_ReceiverPort_DE(&RDI_Inlmpl);
 #define RDI_In_Stop
 #define RDI_Out RDI OutImpl
 #define RDI_Out Setup float64 RDI_OutImpl;
 #define RDI Out Start
 #define RDI_Out_Stop Rte_Write_SenderPort_DE(RDI_OutImpl);
```

Der bereits generierte Code sieht dann für den Compiler nach der Ersetzung der Makros wie folgt aus:

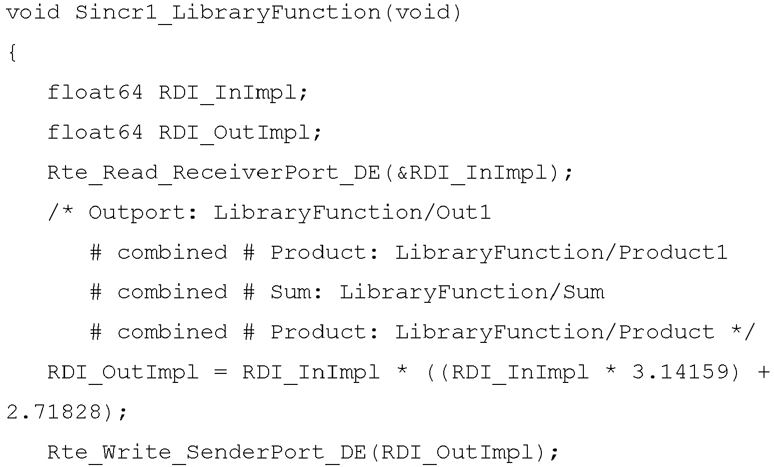

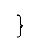

In dem Programmcode werden wie gewünscht die Rte-API Funktionen innerhalb der Library Funktion mit lokalen Variablen aufgerufen. Durch die geschickte Platzierung der zusätzlichen Makros ist der einmal generierte Code flexibel genug, um sowohl für eine Kommunikation über globale Variablen, als auch für eine Kommunikation über Zugriffsfunktionen mit lokalen Buffern verwendet werden zu können, ohne eine erneute Codegenerierung der inkrementellen Anteile nötig zu machen.

Ein erfindungsgemäßes Verfahren zum Erzeugen von Programmcode ermöglicht es somit, den generierten Programmcode zur Unterstützung verschiedener Kommunikationsarten anzupassen, auch wenn eine inkrementelle Codegenerierung erfolgt.

## Patentansprüche

1. Computerimplementiertes Verfahren zum Erzeugen von Programmcode (1) eines ausführbaren Steuerungsprogramms zur Steuerung eines Steuerungssystems, wobei die Funktionalität des Steuerungsprogramms zumindest teilweise in einem grafischen Modell (2) beschrieben ist, wobei das grafische Modell (2) in Programmcode (1) einer textbasierten Programmiersprache übersetzt wird, mit den Schritten:
Erzeugen (S1) eines eine Variable repräsentierenden ersten Platzhalters (P1), welcher in einem vorgegebenen Abschnitt (10) des Programmcodes (1) verwendet wird;
Erzeugen (S2) eines zweiten Platzhalters (P2), welcher vor einen Beginn des den ersten Platzhalter (P1) verwendenden vorgegebenen Abschnitts (10) des Programmcodes (1), platziert wird; und
Erzeugen (S3) eines dritten Platzhalters (P3), welcher nach einem Ende des den ersten Platzhalter (P1) verwendenden vorgegebenen Abschnitts (10) des Programmcodes (1), platziert wird.

2. Computerimplementiertes Verfahren nach Anspruch 1, wobei der erste Platzhalter (P1), der zweite Platzhalter (P2) und der dritte Platzhalter (P3) in einem, zu einem Subsystem (12) des, insbesondere umgebenden, grafischen Modells (2) gehörigen Programmcode (1) erzeugt werden.

3. Computerimplementiertes Verfahren nach Anspruch 1 oder 2, ferner umfassend: Erzeugen (S4) eines vierten Platzhalters (P4), welcher an einen Beginn eines Verwendungsbereichs(14) des vorgegebenen Abschnitts (10) des Programmcodes (1) zur Definition der durch den ersten Platzhalter (P1) repräsentierten Variable platziert wird.

4. Computerimplementiertes Verfahren nach einem der vorhergehenden Ansprüche, wobei in dem vorgegebenen Abschnitt (10) des Programmcodes (1) unter Verwendung des eine Variable repräsentierenden ersten Platzhalters (P1) eine Berechnung durchgeführt wird.

5. Computerimplementiertes Verfahren nach einem der vorhergehenden Ansprüche, wobei der zweite Platzhalter (P2) unmittelbar vor den Beginn des den ersten Platzhalter (P1) verwendenden vorgegebenen Abschnitts (10) des Programmcodes (1), insbesondere am Beginn des Verwendungsbereichs (14) des ersten Platzhalters (P1), platziert wird.

6. Computerimplementiertes Verfahren nach einem der vorhergehenden Ansprüche, wobei der dritte Platzhalter (P3) unmittelbar nach dem Ende des den ersten Platzhalter (P1) verwendenden vorgegebenen Abschnitts (10) des Programmcodes (1), insbesondere am Ende des Verwendungsbereichs (14) des ersten Platzhalters (P1), platziert wird.

7. Computerimplementiertes Verfahren nach einem der vorhergehenden Ansprüche, wobei zumindest ein Platzhalter (P1, P2, P3, P4), insbesondere der erste Platzhalter (P1), der zweite Platzhalter (P2), der dritte Platzhalter (P3) und/oder der vierte Platzhalter (P4), als Präprozessor-Makro in den Programmcode (1) generiert wird.

8. Computerimplementiertes Verfahren nach einem der vorhergehenden Ansprüche, wobei die Platzhalter in dem Subsystem (12) verwendet werden und in dem grafischen Modell (2) definiert sind.

9. Computerimplementiertes Verfahren nach einem der vorhergehenden Ansprüche, wobei bei einer, insbesondere inkrementellen, Programmcodegenerierung durch eine Definition zumindest eines Platzhalters (P1, P2, P3, P4) in einem bereits generierten Programmcode (1) zumindest eine lokale Variable angelegt wird.

10. Computerimplementiertes Verfahren nach einem der vorhergehenden Ansprüche, wobei auf die durch den ersten Platzhalter (P1) repräsentierte Variable über einen Funktionsaufruf (16) zugegriffen wird, und wobei der zweite Platzhalter (P2), der dritte Platzhalter (P3) und/oder der vierte Platzhalter (P4) leer definierbar sind.

11. Computerimplementiertes Verfahren nach einem der vorhergehenden Ansprüche, wobei ein Lesen und Schreiben der, insbesondere externen, Variable über einen Funktionsaufruf (16), insbesondere in einer AUTOSAR RTE-API, durchgeführt wird, wobei der zweite Platzhalter (P2) und der dritte Platzhalter (P3) dabei eine Position definieren, an welcher jeweils ein Funktionsaufruf (16) im Programmcode (1) generiert wird.

12. Computerimplementiertes Verfahren nach einem der vorhergehenden Ansprüche, wobei die Platzhalter (P1, P2, P3, P4) derart definiert sind, dass diese eine Sperre in Multithreading-Modellen bereitstellen, welche einen gleichzeitigen Zugriff unterschiedlicher Threads auf dieselbe Ressource verhindern.

13. Computerimplementiertes Verfahren nach einem der vorhergehenden Ansprüche, wobei die Platzhalter derart definiert sind, dass eine Fehlerbehandlung einer Zugriffsfunktion, insbesondere durch Speichern eines letzten fehlerfreien Werts in einer persistenten Variablen, bereitgestellt wird.

14. Verfahren zum Konfigurieren eines Steuergeräts (18), wobei das Steuergerät (18) mindestens eine Recheneinheit (20) umfasst und vorzugsweise mindestens einen Sensor (22) und/oder mindestens einen Aktor (24) aufweist, um Daten eines physikalischen Prozesses zu erfassen und/oder auf diesen einzuwirken, mit den Schritten:
Einlesen (S1') eines Blockdiagramms;
Erzeugen (S2') eines Programmcodes (1) mit einem Verfahren nach einem der vorhergehenden Ansprüche;
Kompilieren (S3') des Programmcodes (1) für die Recheneinheit (20), so dass ein ausführbarer Programmcode (1') erzeugt wird;
Übertragen (S4') des ausführbaren Programmcodes (1) auf das Steuergerät (18); und
Hinterlegen (S5') des ausführbaren Programmcodes (1') auf einem nichtflüchtigen Speicher des Steuergeräts (18) und/oder Ausführen des ausführbaren Programmcodes (1') durch die Recheneinheit (20) des Steuergeräts (18).

15. Computerprogramm mit Programmcode (1), um zumindest eines der Verfahren nach einem der Ansprüche 1 bis 13 und 14 durchzuführen, wenn das Computerprogramm auf einem Computer ausgeführt wird.

16. Computerlesbarer Datenträger mit Programmcode (1) eines Computerprogramms, um zumindest eines der Verfahren nach einem der Ansprüche 1 bis 13 und 14 durchzuführen, wenn das Computerprogramm auf einem Computer ausgeführt wird.

17. Computersystem (100) umfassend eine Mensch-Maschine-Schnittstelle (101), einen nichtflüchtigen Speicher (102) und einen Prozessor (103), wobei der Prozessor (103) dazu eingerichtet ist, zumindest eines der Verfahren nach einem der Ansprüche 1 bis 13 und 14 durchzuführen.
